# EUROPÄISCHE PATENTSCHRIFT

(11) **EP 2 801 588 B1**
(45) Veröffentlichungstag und Bekanntmachung des Hinweises auf die Patenterteilung: **23.09.2015**
(21) Anmeldenummer: 14167193.3
(22) Anmeldetag: 06.05.2014
(51) Int. Cl.: C08G 69/18, C08G 69/16, C08G 69/20

(54) **Zusammensetzungen, enthaltend N-Acetylcaprolactam, deren Herstellung und deren Verwendung zur Herstellung von Gusspolyamiden**
Compositions containing N-Acetylcaprolactam, their preparation and their use for producing cast polyamides
Compositions contenant de N-Acétylcaprolactame, leur fabrication et leur utilisation pour la fabrication de polyamides de fonte

(30) Priorität: 07.05.2013 EP 13166722
(43) Veröffentlichungstag der Anmeldung: 12.11.2014
(73) Patentinhaber: Rhein Chemie Rheinau GmbH, 68219 Mannheim (DE)
(72) Erfinder: Laufer, Wilhelm, 67158 Ellerstadt (DE); Palzer, André, 68799 Reilingen (DE); Wenzel, Volker, 68542 Heddesheim (DE)
(74) Vertreter: Siegers, Britta

(56) Entgegenhaltungen:
- EP-A1- 2 447 301
- EP-A1- 2 520 602
- DE-A1- 1 950 590

## Beschreibung

Die vorliegenden Erfindung betrifft neue Zusammensetzungen, deren Herstellung und deren Verwendung für die Herstellung von Gusspolyamiden.

Gusspolyamide sind besonders hochmolekulare Polyamide. Bei der Herstellung von Gusspolyamiden wird ein Lactam zusammen mit mindestens einem Katalysator und mindestens einem Aktivator in eine Form gegossen und dann in dieser Form anionisch polymerisiert. Die in der Form vorliegenden Ausgangsverbindungen polymerisieren dabei im Allgemeinen unter der Einwirkung von Wärme. Dabei entsteht ein homogener Werkstoff, welcher extrudierte Polyamide im Hinblick auf die Kristallinität übertrifft.

Gusspolyamide sind als thermoplastische Kunststoffe für die Fertigung komplexer Bauteile geeignet. Sie müssen im Gegensatz zu vielen anderen Thermoplasten nicht aufgeschmolzen werden, sondern entstehen durch eine drucklose anionische Polymerisation von einem Lactam in einer Form bei 120 bis 160°C bereits in wenigen Minuten. Dabei können alle bekannten Gießverfahren, wie Standguss, Rotations- und Schleuderguss, angewendet werden. Als Endprodukt erhält man jeweils Formteile aus einem hochmolekularen, kristallinen Polyamid, das sich durch ein niedriges Gewicht, eine hohe mechanische Belastbarkeit, sehr gute Gleiteigenschaften und eine hervorragende Chemikalienbeständigkeit auszeichnet und das - da die Formen nicht unter Druck gefüllt werden - nur geringe innere Spannungen aufweist. Gusspolyamide lassen sich sägen, bohren, fräsen, schleifen, verschweißen und bedrucken oder lackieren; neben komplexen Hohlformen werden aus diesem Polymer beispielsweise auch Rollen für Personenaufzüge und Halbzeuge, wie zum Beispiel Rohre, Stäbe und Platten für den Maschinenbau und die Automobilindustrie, gefertigt.

Die Herstellung von Gusspolyamidteilen, ausgehend von niedrig viskosen Lactamschmelzen und einem Katalysator sowie einem Aktivator durch die sogenannte aktivierte anionische Polymerisation, ist an sich bekannt. Zu diesem Zweck werden üblicherweise zwei Mischungen aus Katalysator und Lactam bzw. Aktivator und Lactam in Form einer flüssigen Schmelze frisch vor der Polymerisation getrennt voneinander hergestellt, unmittelbar miteinander vermischt und anschließend in der Gussform polymerisiert, (z.B. Vieweg, Müller; Kunststoff-Handbuch Bd. VI, Seiten 42 - 60, Carl Hansa Verlag, München, 1966). Dies soll sicherstellen, dass es im Vorfeld zu keiner unerwünschten Reaktion kommt.

EP 2 447 301 A1 offenbart Gusspolyamide, die lösungsmittelfrei hergestellt werden mit einer Aktivatormischung aus Caprolactam und HDI-Biuret und Caprolactam/ Na-Caprolactamat. EP 2 447 301 A1 offenbart kein Acetyllactam als Bestandteil der Aktivatormischung.

Die im Stand der Technik bekannten Aktivatoren haben die Nachteile, dass diese entweder feste Aktivatoren, die aufwendig zu dosieren sind oder flüssige Polyisocyanate in störendem Lösungsmittel beinhalten.

Die Aufgabe der vorliegenden Erfindung bestand somit darin, Zusammensetzungen bereitzustellen, die die Nachteile des Standes der Technik nicht aufweisen, nämlich keines zusätzlichen Lösemittels bedürfen, trotzdem in flüssiger Form vorliegen und dadurch leicht dosierbar sind. Des Weiteren sollen diese über eine hohe Reaktivität verfügen.

Überraschenderweise wurde nun gefunden, dass Zusammensetzungen enthaltend N-Acetylcaprolactam und mindestens ein Polyisocyanat auf Basis von Hexamethylendiisocyanat (HDI) diese Aufgabe erfüllen und als effektive Aktivatoren einsetzbar sind. Diese benötigen keine zusätzlichen Lösungsmittel, wie beispielsweise N-Methyl-, N-Ethylpyrrolidone oder Caprolacton.

Gegenstand der vorliegenden Erfindung sind daher
Zusammensetzungen, enthaltend
a) N-Acetylcaprolactam 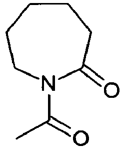 und
b) mindestens ein Polyisocyanat auf Basis von Hexamethylendiisocyanat (HDI) und/oder gegebenenfalls mit Lactam-geblocktes, vorzugsweise Caprolactam-geblocktes Polyisocyanat auf Basis von Hexamethylendiisocyanat (HDI) ausgewählt aus der Gruppe HDI-Biuret, HDI-Uretdion, HDI-Isocyanurat und/oder HDI-Allophanat. Bei dem HDI-Biuret handelt es sich vorzugsweise um eine Verbindung der Formel (I)

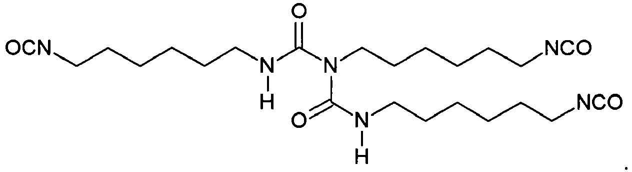

Die vorgenannte Verbindung der Formel (I) ist handelsüblich und ist beispielsweise bei der Firma Bayer MaterialScience AG unter der Handelsnamen Desmodur^{®} N3200 erhältlich.

Bei dem HDI-Uretdion im Sinne der Erfindung handelt es sich vorzugsweise um eine Verbindung der Formel (II)

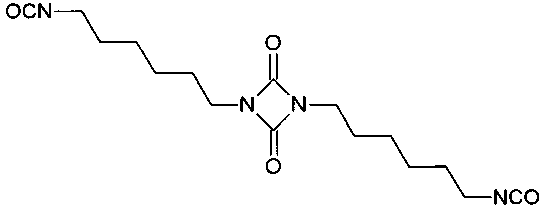

Die vorgenannte Verbindung der Formel (II) ist handelsüblich und ist beispielsweise bei der Firma Bayer MaterialScience AG unter der Handelsnamen Desmodur® N3400 erhältlich.

Bei den HDI-Isocyanurat im Sinne der Erfindung handelt es sich vorzugsweise um eine Verbindung der Formel (III)

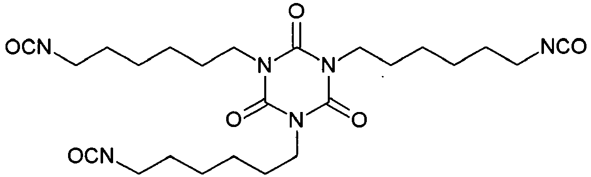

Die vorgenannte Verbindung der Formel (III) ist handelsüblich und ist beispielsweise bei der Firma Bayer MaterialScience AG erhältlich.

Bei dem HDI-Allophanaten im Sinne der Erfindung handelt es sich um Verbindungen der Formel (IV) 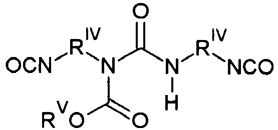 wobei R^{IV}-(CH₂)₆- bedeutet und R^{V} C₁-C₆-Alkyl entspricht.

Die vorgenannten Verbindungen der Formel (IV) sind handelsüblich und sind beispielsweise bei der Firma Bayer MaterialScience AG erhältlich.

In einer bevorzugten Ausführungsform der vorliegenden Erfindung sind die Polyisocyanate auf Basis von Hexamethylendiisocyanat (HDI) mit Caprolactam geblockt.

Caprolactam-geblocktes HDI-Polyisocyanat kann aber auch in situ in dem N-Acetylcaprolactam hergestellt werden. Dabei beträgt das Verhältnis von N-Acetylcaprolactam zu Caprolactam-geblockten HDI-Polyisocyanat 50:50 bis 20:80 bevorzugt 40:60 bis 30:70.

Zur in situ Herstellung der erfindungsgemäßen Zusammensetzung mit dem Caprolactam-geblockten HDI-Polyisocyanat wird vorzugsweise das Caprolactam als Schmelze oder in fester Form (Schuppen oder Pastillen) in N-Acetylcaprolactam gelöst und bei Temperaturen von 50 - 120 °C, bevorzugt 60 - 90 °C, besonders bevorzugt 70 - 80 °C, mit dem Polyisocyanat bevorzugt beim geringen Caprolactamüberschuss umgesetzt. Dabei wird das Polyisocyanat vorzugsweise bei Temperaturen von 30 - 80 °C, besonders bevorzugt 40 - 60 °C vorgewärmt und zu der Caprolactam/N-Acetylcaprolactam-Lösung zudosiert.

Bei dem N-Acetylcaprolactam handelt es sich ebenfalls um eine handelsübliche Verbindung.

In einer bevorzugten Ausführungsform der vorliegenden Erfindung enthält die Zusammensetzung mindestens einen Säurefänger.

Als Säurefänger bevorzugt sind Epoxide und/oder Carbodiimide.

Carbodiimide im Sinne der Erfindung sind vorzugsweise Verbindungen der Formel (V)

R¹-(-N=C=N-R²-)ₘ-R³ (V),

in der
m einer ganzen Zahl von 1 bis 10 entspricht,
R¹ = -R²-NCO, -R²-NHCONHR⁴, -R²-NHCONR⁴R⁵ oder -R²-NHCOOR⁶,
R² = C₁-C₁₈-Alkylen, C₅-C₁₈-Cycloalkylen-, Arylen und/oder C₇-C₁₈- Aralkylen und
R³ = -NCO, -NHCONHR⁴, -NHCONR⁴R⁵ oder -NHCOOR⁶ ist,
wobei in R¹ unabhängig voneinander R⁴ und R⁵ gleich oder verschieden sind und einen C₁-C₆-Alkyl-, C₆-C₁₀-Cycloalkyl- oder C₇-C₁₈-Aralkylrest darstellen und R⁶ eine der Bedeutungen von R² hat oder -(CH₂)₁-(O-(CH₂)ₖ-O)_{g}-R⁷ bedeutet,
mit 1 = 1-3, k= 1-3, g = 0-12 und
R⁷= H oder C₁-C₄-Alkyl.

Ebenfalls einsetzbar sind auch Gemische von Carbodiimiden der Formel (V).

Epoxide im Sinne der Erfindung sind vorzugsweise Glycidylether, vorzugsweise Glycerolglycidylether, kommerziell erhältlich unter dem Namen Glycidylether GE 100 der Firma Raschig GmbH.

In einer bevorzugten Ausführungsform der vorliegenden Erfindung beträgt das Verhältnis von N-Acetylcaprolactam zu Polyisocyanat auf Basis von Hexamethylendiisocyanat (HDI) 1:1 bis 1: 4.

In einer bevorzugten Ausführungsform der vorliegenden Erfindung beträgt der Anteil an Säurefänger 0,1 - 2 Gew.%, besonders bevorzugt 0,5 - 1 Gew.%, bezogen auf die Zusammensetzung.

Gegenstand der vorliegenden Erfindung ist zudem ein Verfahren zur Herstellung der erfindungsgemäßen Zusammensetzung, wonach N-Acetylcaprolactam mit einem Polyisocyanat auf Basis von Hexamethylendiisocyanat (HDI) im Verhältnis von 50:50 bis 20:80, bevorzugt im Verhältnis von 40:60 bis 30:70, gegebenenfalls in Anwesenheit von Carbodiimid und/oder Epoxid, bei Temperaturen von 20 bis 60°C vermischt wird.

In einer weiteren bevorzugten Ausführungsform der vorliegenden Erfindung wird ein Caprolactam-geblocktes HDI-Polyisocyanat eingesetzt.

Weiterhin ist Gegenstand der vorliegenden Erfindung bevorzugt ein Verfahren zur Herstellung der erfindungsgemäßen Zusammensetzung mit dem Caprolactam-geblockten HDI-Polyisocyanat dadurch hergestellt, dass die Herstellung des Caprolactam-geblockten HDI-Polyisocyanat in situ in dem N-Acetylcaprolactam erfolgt. Dabei beträgt das Verhältnis von N-Acetylcaprolactam zu Caprolactam-geblockten HDI-Polyisocyanat 50:50 bis 20:80 bevorzugt 40:60 bis 30:70.

Zur in situ Herstellung der erfindungsgemäßen Zusammensetzung mit dem Caprolactam-geblockten HDI-Polyisocyanat wird vorzugsweise das Caprolactam als Schmelze oder in fester Form (Schuppen oder Pastillen) in N-Acetylcaprolactam gelöst und bei Temperaturen von 50 - 120 °C, bevorzugt 60 - 90 °C, besonders bevorzugt 70 - 80 °C, mit dem Polyisocyanat bevorzugt beim geringen Caprolactamüberschuss umgesetzt. Dabei wird das Polyisocyanat vorzugsweise bei Temperaturen von 30 - 80 °C, besonders bevorzugt 40 - 60 °C vorgewärmt und zu der Caprolactam/N-Acetylcaprolactam-Lösung zudosiert.

Gegenstand der vorliegenden Erfindung ist zudem die Verwendung der erfindungsgemäßen Zusammensetzung zur Polymerisation von Lactamen, bevorzugt von Caprolactam zur Herstellung von Gußpolyamid-Teilen.

Die Polymerisation erfolgt dabei vorzugsweise gemäß den in Kunststoffhandbuch, Bd.3/4, Technische Thermoplaste, Hanser Fachbuch, Seiten 413 - 430 beschriebenen Verfahren.

In einer weiteren Ausführung der vorliegenden Erfindung kann die Polymerisation nach einem geeigneten Formgebungsverfahren, vorzugsweise Spritzguss-, Standgussverfahren oder Rotationsguss-Verfahren, durchgeführt werden. Besonders bevorzugt ist eine Polymerisation nach dem Spritzgussverfahren.

Die vorgenannten erfindungsgemäßen Zusammensetzungen werden vorzugsweise zur Herstellung von Kunststoff-Erzeugnissen verwendet als Ersatz für Metall, bevorzugt in der Automobilindustrie, bei der Produktion von elektrotechnischen Teilen, für die Herstellung von Platten, Stäben, Rohren, Seilscheiben, Seilrollen, Zahnrädern und Lagern und/oder für die Behälterfertigung eingesetzt.

Die nachfolgenden Beispiele dienen der Erläuterung der Erfindung, ohne dabei limitierend zu wirken.

### Ausführungsbeispiele:

### Reagenzien:

Caprolactam trocken (EP > 69 °C) von der Firma Lanxess Deutschland GmbH

Addonyl® Kat NL von der Rhein Chemie Rheinau GmbH, ca. 18 % Natriumcaprolactamat in Caprolactam.

Aktivator Addonyl® 8108, ein Hexamethylen-Diisocyanat (HDI)-Biuret, 70% in N-Ethylpyrrolidon, kommerziell erhältlich bei der Rhein Chemie Rheinau GmbH,

Aktivator I, ein Caprolactam-geblocktes Hexamethylen-Diisocyanat (HDI)-Biuret,

CDI I: Stabaxol ® I TCC, monomeres aromatisches Carbodiimid kommerziell erhältlich bei der Rhein Chemie Rheinau GmbH,

Desmodur® N3200, ein Hexamethylen-Diisocyanat (HDI)-Biuret der Firma Bayer MaterialScience AG,

N-Acetylcaprolactam, in zwei Qualitäten:
Qualität I: Reinheit von mindestens 98%, kommerziell erhältlich bei Fluka Sigma Aldrich,
Qualität II: Qualität I mit einem Anteil von ca. 2 Gew.% Rest-Essigsäure.

### Geräte:

Die verwendete Apparatur zur Schmelzaufbereitung bestand aus:
- 2 Dreihalskolben (500 ml) im Ölbad beheizt
- 2 KPG-Rührer mit Hülse
- 2 Gaskappen je 1 mit und 1 ohne Hahn
- 1 Vakuumpumpe mit Kühlfalle und Manometer.

Die verwendete Apparatur zur Temperaturmessung bestand aus:
- Temperaturmessgerät Testo 175-T3 mit IR-Serial Interface
- Thermodraht zum Verbleib in der ausgehärteten Probe
- Becherglas 600 ml (hohe Form) und einer
- Beheizung für das Becherglas (Metallblock, Ölbad).

### Beispiel 1

### Durchführung und Messung:

Kolben A wurde mit 196,8 g Caprolactam und 3,2 g Aktivator, wie in der nachstehenden Tabelle angegeben, und Kolben B mit 192 g Caprolactam und 8 g Katalysator Addonyl® Kat NL beschickt.

Die Schmelzen aus den Kolben A und B wurden bei 110 - 130 °C (± 2 °C) in einem Ölbad unter Vakuum (<15 mbar) 20 Minuten aufbereitet.

Nach Belüften mit Stickstoff wurden die Komponenten aus Kolben A und Kolben B in einem Dreihalskolben vereinigt, kurz durchgerührt und in das 600 ml Becherglas übergeführt.

Die Formtemperatur (Becherglas) betrug 160° C. Die Polymerisationszeit betrug in der Regel 10 - 20 Minuten.

| **Aktivator in Kolben A** | **Beispiel** | **Topfzeit (s)** | **Viskosität [mPas]** | **Aktivator in Lösungsmittel gelöst** |
|---|---|---|---|---|
| Desmodur® N3200 und N-Acetylcaprolactam (70:30) | Erf 1 | 460 | 180 | nein |
| Aktivator I und N-Acetylcaprolactam (60:40) | Erf 2 | 460 | 90 | nein |
| Aktivator I "in situ" in N-Acetylcaprolactam hergestellt (60:40) | Erf 3 | 460 | 90 | nein |
| Addonyl® 8108 | V1 | 380 | 120 | Ja |
| N-Acetylcaprolactam (Qualität I) | V2 | 650 | 4 | nein |
| Aktivator I | V3 | 270 | 26000 | nein |

| | | | | |
|---|---|---|---|---|
| Vergleichsbeispiel = V., Erfindungsgemäß = erf. | | | | |

| **Aktivator in Kolben A** | **Beispiel** | **Topfzeit (s)** | **Viskosität [mPas]** | **Aktivator in Lösungsmittel gelöst** |
|---|---|---|---|---|
| N-Acetylcaprolactam (Qualität II) | V4 | >1000 (nicht bestimmbar) | 4 | nein |
| N-Acetylcaprolactam (Qualität II) + 2% CDII | V5 | 800 | 4 | nein |

| | | | | |
|---|---|---|---|---|
| Vergleichsbeispiel = V., Erfindungsgemäß = Erf. | | | | |

Im erfindungsgemäßen Beispiel Erf 1, das aus der erfindungsgemäßen Zusammensetzung hervorgeht, wonach N-Acetylcaprolactam mit einem Polyisocyanat auf Basis von Hexamethylendiisocyanat (HDI) vermischt wird, ist deutlich ersichtlich, dass mit 460 s eine schnelle Topfzeit erreicht wurde. Außerdem ist die Viskosität niedrig, so dass eine gute Dosierung gewährleistet ist und so auf das Lösen der Aktivatoren in einem zusätzlichen Lösungsmittel verzichtet werden kann.

Es konnte gezeigt werden, dass im erfindungsgemäßen Beispiel Erf 2, das aus der erfindungsgemäßen Zusammensetzung mit dem Caprolactam-geblockten HDI-Polyisocyanat, hervorgegangen ist, mit 460 s eine schnelle Topfzeit erreicht wurde. Gleichzeitig ist die Viskosität mit 90 mPas niedrig, so dass eine gute Dosierung gewährleistet ist und außerdem auf das Lösen der Aktivatoren in einem zusätzlichen Lösungsmittel verzichtet werden kann.

Setzt man lediglich N-Acetylcaprolactam als Aktivator ein, so entsteht aufgrund der langsameren Topfzeit von 650 s (Vergleichsbeispiel V2) ein Nachteil bei der Verarbeitung gegenüber den erfindungsgemäßen Beispielen.

Setzt man lediglich Aktivator I ein, so ist aufgrund der hohen Viskosität von 26000 mPas nur eine deutlich erschwerte Verarbeitung möglich (Vergleichsbeispiel V3).

Des Weiteren konnte im erfindungsgemäßen Beispiel (Erf 3) gezeigt werden, dass die erfindungsgemäße Zusammensetzung mit dem Caprolactam-geblockten HDI-Polyisocyanat, bei der die Herstellung des Caprolactam-geblockten HDI-Polyisocyanats in situ in N-Acetylcaprolactam erfolgt, ebenfalls eine optimale Verarbeitung durch kurze Topfzeiten, eine niedrige Viskosität und den Verzicht auf ein zusätzliches Lösungsmittel gewährleistet.

Im Vergleichsbeispiel V4 wurde gezeigt, dass die Qualität des Aktivators N-Acetylcaprolactam einen Einfluss auf die Topfzeit hat. Diese Topfzeit verlangsamt sich auf deutlich über 1000 s beim Einsatz Einsatz der Qualität II (entspricht einer technischen Qualität), die im Vergleich zu Qualität I noch ca. 2% Rest-Essigsäure enthält. Dieser Nachteil kann, wie im Beispiel V5 gezeigt werden konnte, durch den Zusatz eines Carbodiimids als Säurefänger relativiert werden.

## Patentansprüche

1. Zusammensetzungen, enthaltend
a) N-Acetylcaprolactam 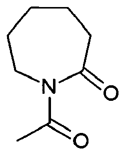 und
b) mindestens ein Polyisocyanat auf Basis von Hexamethylendiisocyanat (HDI) und/oder gegebenenfalls Caprolactam-geblocktes Polyisocyanat auf Basis von Hexamethylendiisocyanat (HDI) ausgewählt aus der Gruppe HDI-Biuret, HDI-Uretdion, HDI-Isocyanurat und/oder HDI-Allophanat.

2. Zusammensetzungen nach Anspruch 1, **dadurch gekennzeichnet, dass** es sich bei dem HDI-Biuret um eine Verbindung der Formel (I) 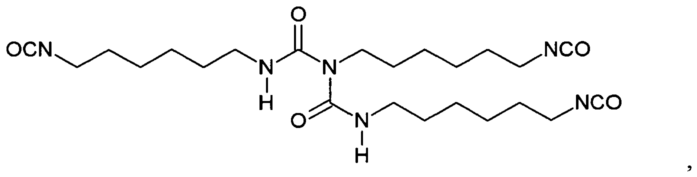 bei dem HDI-Uretdion um eine Verbindung der Formel (II) 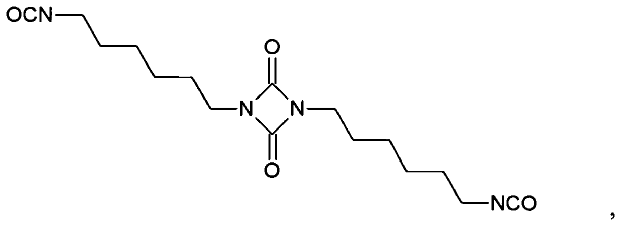 bei dem HDI-Isocyanurat um eine Verbindung der Formel (III) 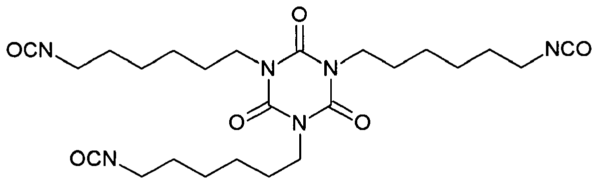 und bei dem HDI-Allophanat um eine Verbindung der Formel (IV) 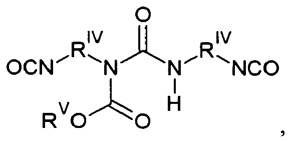 wobei R^{IV}-(CH₂)₆- bedeutet und R^{V} C₁-C₆-Alkyl entspricht,
handelt.

3. Zusammensetzungen nach Anspruch 1 oder 2, **dadurch gekennzeichnet, dass** das Polyisocyanat auf Basis von Hexamethylendiisocyanat (HDI) Caprolactam geblockt ist.

4. Zusammensetzungen nach einem der Ansprüche 1 bis 3, **dadurch gekennzeichnet, dass** diese zusätzlich Säurefänger enthalten.

5. Zusammensetzungen nach Anspruch 4, **dadurch gekennzeichnet, dass** es sich bei dem Säurefänger um Epoxide und/oder Carbodiimide handelt.

6. Zusammensetzungen nach Anspruch 5, **dadurch gekennzeichnet, dass** es sich bei den Carbodiimiden um Verbindungen der Formel (V)
R¹-(-N=C=N-R²-)ₘ-R³ handelt,
in denen
m einer ganzen Zahl von 1 bis 10 entspricht,
R¹ = -R²-NCO, -R²-NHCONHR⁴, -R²-NHCONR⁴R⁵ oder -R²-NHCOOR⁶,
R² = C₁ - C₁₈-Alkylen, C₅-C₁₈-Cycloalkylen-, Arylen und/oder C₇-C₁₈- Aralkylen und
R³ = -NCO, -NHCONHR⁴, -NHCONR⁴R⁵ oder -NHCOOR⁶ ist,
wobei in R¹ unabhängig voneinander R⁴ und R⁵ gleich oder verschieden sind und einen C₁-C₆-Alkyl-, C₆-C₁₀-Cycloalkyl- oder C₇-C₁₈-Aralkylrest darstellen und R⁶ eine der Bedeutungen von R² hat oder -(CH₂)ₗ-(O-(CH₂)ₖ-O)_{g}-R⁷ bedeutet,
mit l= 1-3, k= 1-3, g = 0-12 und
R⁷= H oder C₁-C₄-Alkyl ist.

7. Zusammensetzungen nach einem der Ansprüche 1 bis 6, **dadurch gekennzeichnet, dass** das Verhältnis von N-Acetylcaprolactam zu Polyisocyanat auf Basis von Hexamethylendiamin diisocyanat (HDI) 1:1 bis 1:4 beträgt.

8. Zusammensetzungen nach einem der Ansprüche 1 bis 7, **dadurch gekennzeichnet, dass** der Anteil an Säurefänger 0,1 - 2 Gew.%, bevorzugt 0,5 - 1 Gew.%, bezogen auf die Zusammensetzung beträgt.

9. Verfahren zur Herstellung einer Zusammensetzung nach einem der Ansprüche 1 bis 8, **dadurch gekennzeichnet, dass** N-Acetylcaprolactam mit mindestens einem Polyisocyanat auf Basis von Hexamethylendiisocyanat (HDI) und/oder Caprolactam-geblocktes Polyisocyanat auf Basis von Hexamethylendiisocyanat (HDI), gegebenenfalls in Anwesenheit von mindestens einem Säurefänger, vorzugsweise Carbodiimid und/oder Epoxid, bei Temperaturen von 20 bis 60°C vermischt wird.

10. Verfahren zur Herstellung einer Zusammensetzung nach Anspruch 9, **dadurch gekennzeichnet, dass** die Herstellung des Caprolactam-geblockten HDI-Polyisocyanats in situ in N-Acetylcaprolactam erfolgt.

11. Verwendung der Zusammensetzung nach einem der Ansprüche 1 bis 8 zur Herstellung von Gußpolyamid-Teilen.

## Claims

1. Compositions comprising
a) N-acetylcaprolactam 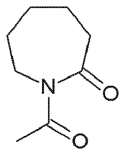 and
b) at least one polyisocyanate based on hexamethylene diisocyanate (HDI) and/or optionally caprolactam-blocked polyisocyanate based on hexamethylene diisocyanate (HDI) selected from the group of HDI biuret, HDI uretdione, HDI isocyanurate and/or HDI allophanate.

2. Compositions according to Claim 1, **characterized in that** the HDI biuret is a compound of the formula (I) 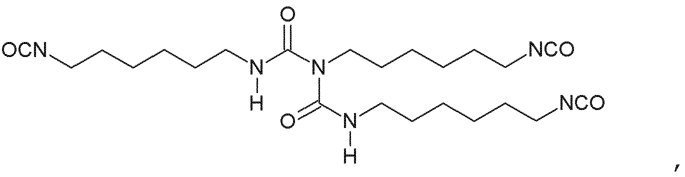 the HDI uretdione is a compound of the formula (II) 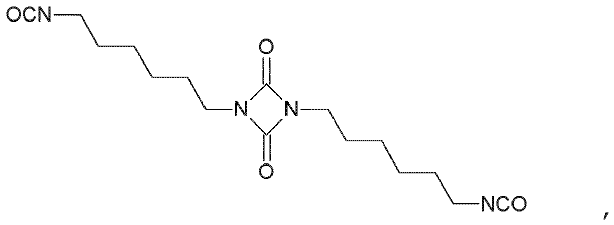 the HDI isocyanurate is a compound of the formula (III) 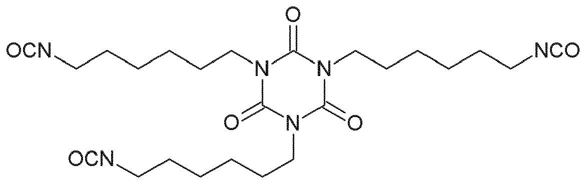 and the HDI allophanate is a compound of the formula (IV) 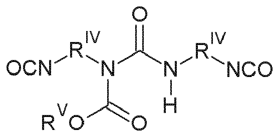 where R^{IV} is -(CH₂)₆- and R^{V} is C₁-C₆-alkyl.

3. Compositions according to Claim 1 or 2, **characterized in that** the polyisocyanate based on hexamethylene diisocyanate (HDI) is caprolactam-blocked.

4. Compositions according to any of Claims 1 to 3, **characterized in that** they additionally comprise acid scavengers.

5. Compositions according to Claim 4, **characterized in that** the acid scavenger comprises epoxides and/or carbodiimides.

6. Compositions according to Claim 5, **characterized in that** the carbodiimides are compounds of the formula (V)
R¹- (-N=C=N-R²-)ₘ-R³
in which
m is an integer from 1 to 10,
R¹ = -R²-NCO, -R²-NHCONHR⁴, -R²-NHCONR⁴R⁵ or -R²-NHCOOR⁶,
R² = C₁-C₁₈-alkylene, C₅-C₁₈-cycloalkylene, arylene and/or C₇-C₁₈-aralkylene and
R³ = -NCO, -NHCONHR⁴, -NHCONR⁴R⁵ or -NHCOOR⁶,
where R⁴ and R⁵ in R¹ are the same or different and are each independently a C₁-C₆-alkyl, C₆-C₁₀-cycloalkyl or C₇-C₁₈-aralkyl radical and R⁶ has one of the meanings of R² or is - (CH₂)ₗ-(O-(CH₂)ₖ-O)_{g}-R⁷,
with 1 = 1-3, k= 1-3, g = 0-12 and
R⁷= H or C₁-C₄-alkyl.

7. Compositions according to any of Claims 1 to 6, **characterized in that** the ratio of N-acetylcaprolactam to polyisocyanate based on hexamethylenediamine diisocyanate (HDI) is 1:1 to 1:4.

8. Compositions according to any of Claims 1 to 7, **characterized in that** the proportion of acid scavenger is 0.1-2% by weight, preferably 0.5-1% by weight, based on the composition.

9. Process for preparing a composition according to any of Claims 1 to 8, **characterized in that** N-acetylcaprolactam is mixed with at least one polyisocyanate based on hexamethylene diisocyanate (HDI) and/or caprolactam-blocked polyisocyanate based on hexamethylene diisocyanate (HDI), optionally in the presence of at least one acid scavenger, preferably carbodiimide and/or epoxide, at temperatures of 20 to 60°C.

10. Process for preparing a composition according to Claim 9, **characterized in that** the caprolactam-blocked HDI polyisocyanate is prepared in situ in N-acetylcaprolactam.

11. Use of the composition according to any of Claims 1 to 8 for production of polyamide castings.

## Revendications

1. Compositions, contenant
a) du N-acétylcaprolactame, 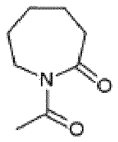 et
b) au moins un polyisocyanate à base d'hexaméthylène-diisocyanate (HDI) et/ou éventuellement un polyisocyanate à base d'hexaméthylènediisocyanate (HDI) bloqué avec un caprolactame, choisi dans le groupe constitué par HDI-biuret, HDI-urétdione, HDI-isocyanurate et/ou HDI-allophanate.

2. Compositions selon la revendication 1, **caractérisées en ce que** le HDI-biuret consiste en un composé de formule (I) 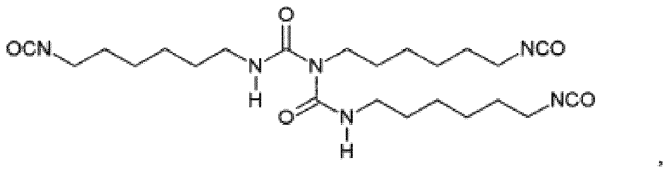 la HDI-urétdione consiste en un composé de formule (II) 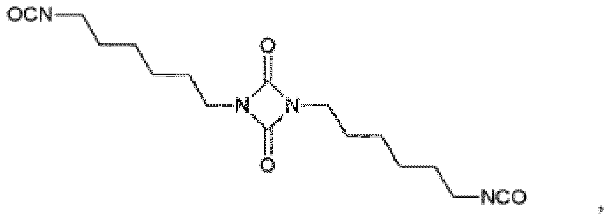 le HDI-isocyanurate consiste en un composé de formule (III) 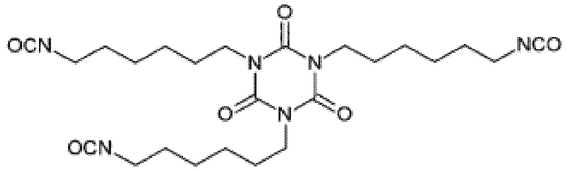 et le HDI-allophanate consiste en un composé de formule (IV) 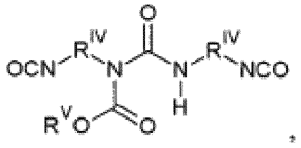 dans laquelle R^{IV} représente -(CH₂)₆- et R^{V} correspond à un groupe alkyle en C₁-C₆.

3. Compositions selon la revendication 1 ou 2, **caractérisées en ce que** le polyisocyanate à base d'hexaméthylénediisocyanate (HDI) est bloqué avec un caprolactame.

4. Compositions selon l'une quelconque des revendications 1 à 3, **caractérisées en ce qu'**elles contiennent en outre un capteur d'acide.

5. Compositions selon la revendication 4, **caractérisées en ce que** pour ce qui est du capteur d'acide il s'agit d'époxydes et/ou de carbodiimides.

6. Compositions selon la revendication 5, **caractérisées en ce que** pour ce qui est des carbodiimides il s'agit de composés de formule (V)
R¹-(-N=C=N-R²ₘ-R³,
dans laquelle
m correspond à un nombre entier valant de 1 à 10,
R¹ est -R²-NCO-, -R²-NHCONHR⁴, -R²-NHCONR⁴R⁵ ou -R²-NHCOOR⁶,
R² est un groupe alkylène en C₁-C₁₈, cycloalkylène en C₅-C₁₈, arylène et/ou aralkylène en C₇-C₁₈ et
R³ est -NCO, -NHCONHR⁴, -NHCONR⁴R⁵ ou -NHCOOR⁶,
dans R¹, R et R indépendamment l'un de l'autre étant identiques ou différents et représentant un radical alkyle en C₁-C₅, cycloalkyle en C₆-C₁₀ ou aralkyle en C₇-C₁₈ et R⁶ ayant l'une des significations de R² ou représentant - (CH₂)ₗ-(O-(CH₂)ₖ-O)_{g}-R⁷,
où 1 = 1-3, k = 1-3, g = 0-12 et
R est H ou un groupe alkyle en C₁-C₄.

7. Compositions selon l'une quelconque des revendications 1 à 6, **caractérisées en ce que** le rapport du N-acétylcaprolactame au polyisocyanate à base d'hexaméhylènediaminediisocyanate (HDI) vaut de 1:1 à 1:4.

8. Compositions selon l'une quelconque des revendications 1 à 7, **caractérisées en ce que** la proportion de capteur d'acide vaut de 0,1 à 2 % en poids, de préférence de 0,5 à 1 % en poids, par rapport à la composition.

9. Procédé pour la préparation d'une composition selon l'une quelconque des revendications 1 à 8, **caractérisé en ce qu'**on mélange du N-acétylcaprolactame avec au moins un polyisocyanate à base d'hexaméthylènediisocyanate (HDI) et/ou un polyisocyanate à base d'hexaméthylènediisocyanate (HDI) bloqué avec un caprolactame, éventuellement en présence d'au moins un capteur d'acide, de préférence un carbodiimide et/ou un époxyde, à des températures de 20 à 60 °C.

10. Procédé pour la préparation d'une composition selon la revendication 9, **caractérisé en ce que** la préparation du HDI-polyisocyanate bloqué avec un caprolactame s'effectue in situ dans du N-acétyl-caprolactame.

11. Utilisation de la composition selon l'une quelconque des revendications 1 à 8, pour la fabrication de pièces en polyamide moulé.
